**Europäisches Patentamt**

(19) **European Patent Office**

**Office européen des brevets**

(11) Veröffentlichungsnummer: **0 001 234**
**B1**

(12) ## EUROPÄISCHE PATENTSCHRIFT

(45) Veröffentlichungstag der Patentschrift:
08.04.81

(21) Anmeldenummer: **78100811.5**

(22) Anmeldetag: **04.09.78**

(51) Int. Cl.³: **C 23 D 5/04,** C 03 C 7/02,
B 05 D 1/06

(54) Ein-Brand-zwei-Schichtemaillierung mit elektrostatischem Pulverauftrag.

(30) Priorität: **17.09.77 DE 2741971**

(43) Veröffentlichungstag der Anmeldung:
**04.04.79 Patentblatt 79/7**

(45) Bekanntmachung des Hinweises auf die Patenterteilung:
**08.04.81 Patentblatt 81/14**

(84) Benannte Vertragsstaaten:
**BE CH DE FR GB NL SE**

(56) Entgegenhaltungen:
**DE-A-2 519 890**
**DE-A-2 710 263**
**DE-A-2 747 858**
**US-A-2 602 758**
**US-A-2 786 782**
**US-A-3 930 062**
**PROCEEDINGS OF THE PROCELAIN ENAMEL INST. TECH. FORUM, 38, 1976, USA**
**A. I. MEDELKJKOVIC: »A new approach to porcelain enameling«, Seiten 46—52**

(73) Patentinhaber: **BAYER AG, Zentralbereich Patente, Marken und Lizenzen, D-5090 Leverkusen 1, Bayerwerk (DE)**

(72) Erfinder: **Wagner, Gebhard, Dr., Ackerstrasse 31, D-5068 Odenthal (DE)**
Erfinder: **Joseph, Werner, Dr., Ludwig-Aschoff-Strasse 20, D-5000 Köln 80 (DE)**

Ein-Brand-Zwei-Schicht-Emaillierung mit elektrostatischem Pulverauftrag

Die Erfindung betrifft ein Verfahren zum Emaillieren mit Emailpulverauftrag, speziell zur Zweischichtemaillierung durch elektrostatisches Versprühen von Grund- und Deckemailpulvern mit nachfolgendem gemeinsamen Einbrand.

Kaltgewalzte, emaillierfähige Stahlbleche mit einem Kohlenstoffgehalt von bis zu 0,2% werden üblicherweise mit Grund- und Deckemailfritten emailliert, wobei jede Emailschicht für sich eingebrannt wird.

Die Direktemaillierung mit haftoxidfreien Emails wie z. B. mit titangetrübten Emails erfordert dagegen ausgewählte und/oder entkohlte Stähle und aufwendige Vorbehandlungen der Werkstücke mit einer Vernickelung der Stahloberfläche.

Im Sanitärbereich, bei Kochgeschirren und Heißwasserspeichern werden noch heute aus Gründen wie Festigkeit, Tiefzieheigenschaften und Stahlblechstärke kohlenstoffhaltige Stähle eingesetzt. Diese Teile werden konventionell mit Grund- und Deckemails emailliert, wobei jede Emailschlickerschicht, nachdem sie auf das metallische Werkstück aufgebracht ist, getrocknet und für sich eingebrannt wird.

Es hat nicht an Versuchen gefehlt, die Wirtschaftlichkeit des Emaillierprozesses zu verbessern und einen Einbrand zu sparen, indem man Grund- und Deckemails nacheinander aufgebracht und beide Schichten gemeinsam eingebrannt hat. So sind Verfahren bekanntgeworden, den Grundemailschlicker mit Organo-Silizium-Verbindungen zu imprägnieren, was einen nachfolgenden Auftrag von Deckemail auf die nicht mehr saugfähige Grundemailschicht ermöglicht.

Das technisch fortschrittliche Aufbringen von Emailfritten in Pulverform auf elektrostatischem Wege ist durch Vorbehandlung der Emailpulver gemäß DE-OS 2 538 601 mit solchen Stoffen möglich geworden, die mit an der Oberfläche der Emailpulver befindlichen Silanol-Gruppen reagieren, wodurch der spezifische elektrische Widerstand der Emailfritten von etwa $10^6$ Ohm · cm auf mehr als $10^{12}$ Ohm · cm angehoben wird. Beim elektrostatischen Pulverauftrag folgen elektrisch geladene Emailfritteteilchen den elektrischen Feldlinien, wobei gewährleistet sein muß, daß die elektrische Ladung nach dem Auftreffen der Partikel auf das metallische Werkstück nur langsam und in kontrollierter Weise an das geerdete Werkstück abgegeben wird, so daß eine hinreichende Pulververhaftung zum metallischen Werkstück und innerhalb der Emailpulverschicht erreicht wird.

Die Vorbehandlung bewirkt außerdem, daß das Emailpulver auch bei mechanischer Beanspruchung während des Auftrags sowie während und nach der Rückgewinnung fließfähig, d. h. im Luftkissen fluidisierbar und damit im Luftstrom förderbar, und auch in feuchter Atmosphäre der notwendige spezifische elektrische Widerstand erhalten bleiben.

Der elektronische Auftrag von derartig vorbehandelten Titanweißemailpulvern auf entkohlte, für die Direktweißemaillierung vorbehandelte Stahlbleche wird seit einiger Zeit technisch durchgeführt. Versuche, derartig vorbehandelte Grund- und Deckemailpulver nacheinander elektrostatisch auf das metallische Werkstück aufzutragen und anschließend gemeinsam einzubrennen, ergaben keine einwandfreie Emaillierung. So traten z. B. schwarze Punkte in der Deckemailschicht auf. Auch kam es besonders an Ecken und Kanten des Werkstücks zu höheren Pulverschichtstärken, was eine Schaumigkeit der aufgebrachten Emailschicht zur Folge hatte. Weiter wurden in der Pulverschicht kraterartige Vertiefungen infolge elektrostatischer Abstoßung der gleichsinnig geladenen Pulverteilchen beobachtet. Infolge dieser Fehlererscheinungen war es nicht mehr möglich, eine glatte, fehlerfreie Emaillierung zu erzielen. Zum Beispiel wurde in der US-PS 3 930 062 bereits ein solches Verfahren vorgeschlagen, bei dem die elektrischen Widerstände von Grund- und Deckemailpulver zwischen $10^{12}$ und $10^{16}$ Ohm · cm liegen sollen. Die Bedeutung des Unterschiedes der Pulverwiderstände von Grund- und Deckemail wurden jedoch nicht erkannt.

Überraschenderweise wurde gefunden, daß die genannten Nachteile vermieden werden können, wenn man den spezifischen elektrischen Widerstand des Grundemailpulvers auf $10^{10} - 10^{14}$ Ohm · cm, vorzugsweise auf $10^{12} - 10^{14}$ Ohm · cm, und den spezifischen elektrischen Widerstand des Deckemailpulvers auf $10^{14} - 10^{16}$ Ohm · cm einstellt, wobei das Verhältnis der spezifischen Widerstände mindestens $10^2$ beträgt.

Dies ist um so überraschender, als man bisher bestrebt war, bei Emailpulvern für den elektrostatischen Auftrag einen möglichst hohen spezifischen elektrischen Widerstand zu erreichen, um einen hohen Abscheidungsgrad des Emailpulvers auf dem zu beschichtenden Werkstück sowie gutes Fließverhalten mit hoher Alterungsbeständigkeit der Pulver auch an feuchter Luft und bei mechanischer Beanspruchung der Pulver zu erzielen.

Gegenstand der vorliegenden Erfindung ist daher ein Verfahren zur Zweischichtemaillierung, wobei Grund- und Deckemailpulver auf metallische Trägerwerkstoffe elektrostatisch aufgebracht und anschließend gemeinsam eingebrannt werden, das dadurch gekennzeichnet ist, daß das Grundemailpulver auf einen spezifischen elektrischen Widerstand von $10^{10} - 10^{14}$ Ohm · cm, vorzugsweise $10^{12} - 10^{14}$ Ohm · cm, und das Deckemailpulver auf einem spezifischen elektrischen Widerstand von $10^{14} - 10^{16}$ Ohm · cm eingestellt wird, wobei das Verhältnis der spezifischen Widerstände minde-

stens $10^2$ beträgt.

Die Einstellung des elektrichen Widerstandes erfolgt nach der Lehre der oben zitierten DE-OS 2 538 601.

Die unterschiedlichen spezifischen elektrischen Widerstände der Grund- und Deckemailpulver, die sich im spezifischen elektrischen Widerstand um mindestens $10^2$ Ohm · cm unterscheiden, lassen sich durch geeignete Auswahl der Vorbehandlungsmittel und Steuerung der Beladung der Teilchen mit dem Vorbehandlungsmittel erreichen, wobei diese Parameter jeweils durch Vorversuche ermittelt werden.

Es wurde weiter gefunden, daß man eine qualitativ hochwertige Grund- und Deckemaillierung in einem Brand erzielt, wenn man Grund- und Deckemails einsetzt, die sich in ihrer Oberflächenspannung vorzugsweise um mindestens 0,05 N/m unterscheiden, wobei erfindungsgemäß Grundemails mit einer Oberflächenspannung von mindestens 0,28 N/m und Deckemails einzusetzen sind, deren Oberflächenspannung höchstens 0,26 N/m bei der Emaileinbrandtemperatur beträgt.

Die Oberflächenspannung der Emailfritten läßt sich in bekannter Weise nach der Fadengewichtsmethode nach G. Jaeckel bestimmen (Glastechn. Ber. 12 [1934], 414).

Nach dem heutigen Stand der Emailliertechnik ist bei der konventionellen Zweischichtemaillierung, bei der Grund- und Deckemail jeweils einzeln eingebrannt werden, die Grenze zwischen den beiden Emailschichten relativ scharf. Werden jedoch Grund- und Deckemail gemeinsam eingebrannt, so sind Diffusionsreaktionen zwischen beiden Emailschichten — gefördert durch Gasentwicklungen und Auflösung des sich an der Stahloberfläche bildenden Eisenoxids in der Emailschicht — kaum zu vermeiden. Derartige Diffusionsvorgänge führen meist zu einer unruhigen, in vielen Fällen qualitativ unbefriedigenden Emaillierung.

Überraschenderweise wurde gefunden, daß diese unerwünschten Diffusionsvorgänge bei dem Verfahren gemäß der Erfindung vermindert werden, wenn man Grundemailfritten verwendet, deren Gehalt an Oxiden der Erdalkalimetalle des Zinks, Mangans und Eisens zwischen 20 und 40 Gew.-%, vorzugsweise zwischen 20 und 30 Gew.-% liegen, wobei der Gehalt an Zinkoxid nicht über 12 Gew.-%, der Gehalt an Manganoxid bzw. Eisenoxid jeweils nicht über 9 Gew.-% betragen soll.

Weiterhin wurde gefunden, daß ein Zusatz von 1 bis 10 Gew.-%, vorzugsweise 3−5 Gew.-% Eisenoxidpigment zum Grundemailpulver diese Diffusionsvorgänge zwischen Grund- und Deckemails weiter vermindert und die Oberflächenqualität der Emaillierung vorteilhaft beeinflußt.

Es hat sich gezeigt, daß die besonders bevorzugten Grundemailpulver für den Auftrag im elektrostatischen Feld für die Zweischichtemaillierung in einem Brand mit den vorher genannten Eigenschaften wie spezifischem Widerstand von $10^{10}-10^{14}$ Ohm · cm, vorzugsweise $10^{12}-10^{14}$ Ohm · cm, der Oberflächenspannung von mindestens 0,28 N/m und den vorher beschriebenen diffusionshemmenden Eigenschaften des Grundemails in der Lage sind, überraschenderweise schon in Schichtstärken von 0,01−0,04 mm, vorzugsweise 0,02−0,03 mm, — gemessen im eingebrannten Zustand — alle die Forderungen erfüllen, die allgemein in Schlickerform aufgebrachte Grundemails in Schichtstärken über 0,08 mm erfüllen.

Von diesen Eigenschaften sind besonders Benetzung des Trägermaterials, Auflösung der sich beim Einbrand bildenden Oxide sowie Haftung der Emailschicht auf dem Trägermaterial zu nennen.

Erfindungsgemäß werden bevorzugt Grundemailfritten folgender Zusammensetzung eingesetzt:

| | |
|---|---|
| $SiO_2$ | 27 − 35 Gew.-% |
| $B_2O_3$ | 15 − 20 Gew.-% |
| $Al_2O_3$ | 0 − 7 Gew.-% |
| Alkalioxide | 12 − 20 Gew.-% |
| Erdalkalioxide | 15 − 25 Gew.-% |
| $Fe_2O_3$ | 0 − 9 Gew.-% |
| ZnO | 0 − 12 Gew.-% |
| MnO | 0 − 9 Gew.-% |
| F | 1 − 6 Gew.-% |
| Haftoxide ($NiO$, $CoO$, $CuO$) | 1 − 4 Gew.-% |

Die nach dem Stand der Technik bei Dünnschichtemaillierung im allgemeinen zur Verbesserung der Emailhaftung und Vermeidung von Emaillierfehlern notwendige Vorbehandlung der Stahlbleche durch Vernickeln kann bei Einsatz der erfindungsgemäßen Grundemails entfallen, da die Haftung der erfindungsgemäßen Grund-/Deckemailpulver-Kombinationen auf unvernikkelten Stahlblechen besser als oder zumindest vergleichbar wie bei der Verwendung von vernickelten Stahlblechen ist.

Auch bei mehrfachem Einbrand, wie dies beim Dekorieren der Emailschicht mit Abziehbildern oder im Siebdruckverfahren erfolgt, bleibt die gute Haftung erhalten.

Die erfindungsgemäßen Grund-/Deckemailpulver-Kombinationen ergeben darüber hinaus auch auf schlecht entfetteten, ungebeizten Stahlblechen mit Kohlenstoffgehalten bis zu 0,2% eine qualitativ hochwertige Emaillierung mit guter Haftung, so daß die Fehlerhäufigkeit bei industrieller Verarbeitung stark reduziert wird.

Die vorliegende Erfindung wird durch die folgenden Beispiele näher erläutert:

### Beispiel 1

1 kg eines Grundemails folgender Zusammensetzung

| | |
|---|---|
| $SiO_2$ | 33 Gew.-% |
| $B_2O_3$ | 18 Gew.-% |

| | |
|---|---|
| Al$_2$O$_3$ | 3 Gew.-% |
| Alkalioxide | 15 Gew.-% |
| Erdalkalioxide | 20 Gew.-% |
| Fe$_2$O$_3$ | 2 Gew.-% |
| ZnO | 3 Gew.-% |
| NiO | 1 Gew.-% |
| CoO | 1 Gew.-% |
| F | 4 Gew.-% |

mit einer Oberflächenspannung von 0,295 N/m wurde in einer Porzellankugelmühle unter Zusatz von 2 g Diphenylsilandiol und 2 g Hexamethyldisilazan so lange vermahlen, bis auf einem Sieb der Maschenweite von 60 μm der Rückstand 3% betrug. Das so erhaltene Pulver hatte einen spezifischen elektrischen Widerstand von $2 \times 10^{13}$ Ohm · cm.

In einer weiteren Porzellankugelmühle wurde 1 kg eines Titanweißemails der Zusammensetzung

| | |
|---|---|
| SiO$_2$ | 45 Gew.-% |
| B$_2$O$_3$ | 18 Gew.-% |
| Alkalioxide | 15 Gew.-% |
| TiO$_2$ | 18 Gew.-% |
| P$_2$O$_5$ | 2 Gew.-% |
| MgO | 1 Gew.-% |
| F | 2 Gew.-% |

mit einer Oberflächenspannung von 0,225 N/m unter Zusatz von 4 g Methylhydrogensiloxan der Viskosität 30 m Pas (=30 Millipascalsekunden = 30 c Poise) so lange vermahlen, bis auf einem Sieb der Maschenweite 60 μm der Rückstand 5% betrug. Der spezifische elektriche Widerstand betrug $8 \times 10^{15}$ Ohm · cm.

Das mit Luft fluidisierte Grundemailpulver wurde mit Förderluft zu einer elektrostatischen Pulversprühpistole, an deren Koronaelektroden eine Spannung von 90 kV angelegt wurde, gefördert. Auf ein in üblicher Weise zum Emaillieren vorbehandeltes Stahlblech der Maße 20 × 20 cm wurden so 3 g Emailpulver einseitig aufgebracht. Diese Menge entsprach einer Schichtstärke von 0,025 mm im eingebrannten Zustand.

Anschließend wurde mit einer gleichartigen Sprühpistole 12 g Weißemailpulver entsprechend einer Schichtstärke von 0,11 mm im eingebrannten Zustand aufgebracht.

Beide Emails wurden dann bei 820°C 4' in einem Muffelofen eingebrannt.

Die emaillierte Oberfläche war fehlerfrei und glatt. Die Haftung war gut.

### Beispiel 2

1 kg eines Grundemails folgender Zusammensetzung

| | |
|---|---|
| SiO$_2$ | 31 Gew.-% |
| B$_2$O$_3$ | 17 Gew.-% |
| Al$_2$O$_3$ | 4 Gew.-% |
| Alkalioxide | 14 Gew.-% |

| | |
|---|---|
| Erdalkalioxide | 18 Gew.-% |
| Fe$_2$O$_3$ | 6 Gew.-% |
| MnO | 3 Gew.-% |
| CoO | 1 Gew.-% |
| CuO | 1 Gew.-% |
| F | 5 Gew.-% |

mit einer Oberflächenspannung von 0,280 N/m wurde in einer Porzellankugelmühle unter Zusatz von 1 g Diphenylsilandiol, 1 g Hexamethyldisilazan und 3 g Methylhydrogensiloxan der Viskosität 30 m Pas so lange vermahlen, bis auf einem Sieb der Maschenweite 60 μm der Rückstand 3% betrug. Das so erhaltene Pulver hatte einen spezifischen elektrischen Widerstand von $8 \times 10^{13}$ Ohm · cm.

In einer weiteren Porzellankugelmühle wurde 1 kg eines pastellfarbenen Titanemails der Zusammensetzung

| | |
|---|---|
| SiO$_2$ | 42 Gew.-% |
| B$_2$O$_3$ | 17 Gew.-% |
| Al$_2$O$_3$ | 3 Gew.-% |
| Alkalioxide | 17 Gew.-% |
| TiO$_2$ | 15 Gew.-% |
| P$_2$O$_5$ | 1 Gew.-% |
| MgO | 1 Gew.-% |
| CuO | 2 Gew.-% |
| F | 2 Gew.-% |

mit einer Oberflächenspannung von 0,220 N/m unter Zusatz von 4 g Methylhydrogensiloxan der Viskosität 30 m Pas so lange vermahlen, bis auf einem Sieb der Maschenweite 60 μm der Rückstand 5% betrug. Der spezifische elektrische Widerstand betrug $5 \times 10^{15}$ Ohm · cm.

Von dem Grundemailpulver wurden mit Hilfe einer elektrostatischen Pulversprühpistole, an deren Koronaelektrode eine Spannung von 90 kV angelegt wurde, auf ein in üblicher Weise zum Emaillieren vorbehandeltes Stahlblech der Maße 20 × 20 cm 4 g einseitig aufgebracht. Diese Menge entsprach einer Schichtstärke von 0,032 mm im eingebrannten Zustand.

Anschließend wurden mit einer gleichartigen Sprühpistole 15 g Farbemailpulver entsprechend einer Schichtstärke von 0,14 mm im eingebrannten Zustand aufgebracht.

Beide Emails wurden dann bei 820°C 4' in einem Muffelofen eingebrannt.

Die emaillierte Oberfläche war fehlerfrei und glatt. Die Haftung war gut.

### Beispiel 3

1 kg eines Grundemails folgender Zusammensetzung

| | |
|---|---|
| SiO$_2$ | 29 Gew.-% |
| B$_2$O$_3$ | 17 Gew.-% |
| Al$_2$O$_3$ | 5 Gew.-% |
| Alkalioxide | 14 Gew.-% |
| Erdalkalioxide | 16 Gew.-% |
| Fe$_2$O$_3$ | 9 Gew.-% |

| MnO | 2 Gew.-% |
|-----|----------|
| ZnO | 2 Gew.-% |
| NiO | 1 Gew.-% |
| CoO | 1 Gew.-% |
| CuO | 1 Gew.-% |
| F | 3 Gew.-% |

mit einer Oberflächenspannung von 0,305 N/m wurde in einer Porzellankugelmühle unter Zusatz von 2 g Diphenylsilandiol und 1 g Methylhydrogensiloxan der Viskosität 30 m Pas so lange vermahlen, bis auf einem Sieb der Maschenweite von 60 μm der Rückstand 3% betrug. Das so erhaltene Pulver hatte einen spezifischen elektrischen Widerstand von $6 \times 10^{12}$ Ohm · cm.

In einer weiteren Porzellankugelmühle wurde 1 kg eines Titanweißemails der Zusammensetzung

| $SiO_2$ | 42 Gew.-% |
|---------|-----------|
| $B_2O_3$ | 18 Gew.-% |
| Alkalioxide | 17 Gew.-% |
| $TiO_2$ | 18 Gew.-% |
| $P_2O_5$ | 2 Gew.-% |
| MgO | 1 Gew.-% |
| F | 2 Gew.-% |

mit einer Oberflächenspannung von 0,225 N/m unter Zusatz von 4 g Methylhydrogensiloxan der Viskosität 30 m Pas so lange vermahlen, bis auf einem Sieb der Maschenweite von 60 μm der Rückstand 5% betrug. Der spezifische elektrische Widerstand betrug $8 \times 10^{15}$ Ohm · cm.

Von dem Grundemailpulver wurden mit Hilfe einer elektrostatischen Pulversprühpistole, an deren Koronaelektrode eine Spannung von 90 kV angelegt wurde, auf ein in üblicher Weise zum Emaillieren vorbehandeltes Stahlblech der Maße 20 × 20 cm 2 g einseitig aufgebracht. Diese Menge entsprach einer Schichtstärke von 0,017 mm im eingebrannten Zustand.

Anschließend wurden mit einer gleichartigen Sprühpistole 11 g Weißemailpulver entsprechend einer Schichtstärke von 0,10 mm im eingebrannten Zustand aufgebracht. Beide Emails wurden dann bei 820°C 4′ in einem Muffelofen eingebrannt.

Die emaillierte Oberfläche war fehlerfrei und glatt. Die Haftung war gut.

## Beispiel 4

1 kg eines Grundemails folgender Zusammensetzung

| $SiO_2$ | 33 Gew.-% |
|---------|-----------|
| $B_2O_3$ | 18 Gew.-% |
| $Al_2O_3$ | 3 Gew.-% |
| Alkalioxide | 15 Gew.-% |
| Erdalkalioxide | 20 Gew.-% |
| $Fe_2O_3$ | 2 Gew.-% |
| ZnO | 3 Gew.-% |
| NiO | 1 Gew.-% |

| CoO | 1 Gew.-% |
|-----|----------|
| F | 4 Gew.-% |

mit einer Oberflächenspannung von 0,295 N/m in einer Porzellankugelmühle unter Zusatz von 50 g Eisenoxidpigment ($Fe_2O_3$) und 2 g Diphenylsilandiol und 2 g Hexamethyldisilazan so lange vermahlen, bis auf einem Sieb der Maschenweite von 60 μm der Rückstand 3% betrug. Das so erhaltene Pulver hatte einen spezifischen elektrischen Widerstand von $2 \times 10^{13}$ Ohm · cm.

In einer weiteren Porzellankugelmühle wurde 1 kg eines Transparentemails der Zusammensetzung

| $SiO_2$ | 53 Gew.-% |
|---------|-----------|
| $B_2O_3$ | 14 Gew.-% |
| Alkalioxid | 18 Gew.-% |
| $TiO_2$ | 8 Gew.-% |
| $Al_2O_3$ | 3 Gew.-% |
| CaO | 2 Gew.-% |
| F | 2 Gew.-% |

mit einer Oberflächenspannung von 0,240 N/m unter Zusatz von 30 g Kadmiumsulfoselenid-Rotfarbkörper sowie von 4 g Methylhydrogensiloxan der Viskosität 30 m Pas so lange vermahlen, bis auf einem Sieb der Maschenweite 60 μm der Rückstand 4% betrug. Der spezifische elektrische Widerstand betrug $3 \times 10^{15}$ Ohm · cm.

Von dem Grundemailpulver wurden mit Hilfe einer elektrostatischen Pulversprühpistole, an deren Koronaelektrode eine Spannung von 90 kV angelegt wurde, auf ein in üblicher Weise zum Emaillieren vorbehandeltes Stahlblech der Maße 20 × 20 cm 3 g einseitig aufgebracht. Diese Menge entsprach einer Schichtstärke von 0,025 mm im eingebrannten Zustand.

Anschließend wurden mit einer gleichartigen Sprühpistole 15 g Transparentemailpulver mit Farbkörper entsprechend einer Schichtstärke von 0,14 mm im eingebrannten Zustand aufgebracht. Beide Emails wurden dann bei 820°C 4′ in einem Muffelofen eingebrannt.

Die emaillierte Oberfläche war fehlerfrei und glatt. Die Haftung war gut.

## Patentansprüche

1. Verfahren zur Zweischichtemaillierung, wobei Grund und Deckemailpulver auf metallische Trägerwerkstoffe elektrostatisch aufgebracht werden und anschließend gemeinsam eingebrannt werden, dadurch gekennzeichnet, daß das Grundemailpulver auf einen spezifischen elektrischen Widerstand von $10^{10}$—$10^{14}$ Ohm · cm, vorzugsweise $10^{12}$—$10^{14}$ Ohm · cm, und das Deckemailpulver auf einen spezifischen elektrischen Widerstand von $10^{14}$—$10^{16}$ Ohm · cm eingestellt wird, wobei das Verhältnis der spezifischen Widerstände mindestens $10^2$ beträgt.

2. Verfahren nach Anspruch 1, dadurch gekennzeichnet, daß die Oberflächenspannung des Grundemails mindestens 0,280 N/m, die des Deckemails höchstens 0,260 N/m beträgt, wobei die Differenz der Oberflächenspannungen zwischen Grund- und Deckemail mindestens 0,050 N/m beträgt.

3. Verfahren nach mindestens einem der Ansprüche 1 und 2, dadurch gekennzeichnet, daß die verwendete Grundemailfritte eines oder mehrere der Oxide der zweiwertigen Metalle wie Erdalkalimetall, Zink, Mangan und Eisen in Konzentration von 20 bis 40 Gew.-%, vorzugsweise 20–30 Gew.-%, enthält, wobei der Gehalt an Zinkoxid nicht über 12 Gew.-%, der Gehalt an Manganoxid bzw. Eisenoxid jeweils nicht über 9 Gew.-% beträgt.

4. Verfahren nach mindestens einem der Ansprüche 1 bis 3, dadurch gekennzeichnet, daß dem Grundemailpulver vor der Einstellung des elektrischen Widerstandes 1 bis 10 Gew.-%, vorzugsweise 3 bis 5 Gew.-%, feinteiliges Eisenoxid zugesetzt wird.

5. Verfahren nach mindestens einem der Ansprüche 1 bis 4, dadurch gekennzeichnet, daß das Grundemailpulver in einer solchen Menge aufgebracht wird, daß die Schichtstärke des Grundemails nach dem Einbrand 0,01 bis 0,04 mm, vorzugsweise 0,02–0,03 mm, beträgt.

## Claims

1. A two-layer enamelling process in which the ground coat and surface coat powders are electrostatically applied to metallic substrates and subsequently baked together, characterised in that the ground coat powder is adjusted to an electrical resistivity of from $10^{10}$ to $10^{14}$ ohm $\cdot$ cm, preferably from $10^{12}$ to $10^{14}$ ohm $\cdot$ cm, and the surface coat powder is adjusted to an electrical resistivity of from $10^{14}$ to $10^{16}$ ohm $\cdot$ cm, the ratio of the resistivities being at least $10^2$.

2. A process according to Claim 1, characterised in that the surface tension of the ground amounts to at least 0.280 N/m and the surface tension of the surface coat to at most 0.260 N/m, the difference between the surface tensions of the ground coat and surface coat amounting to at least 0.050 N/m.

3. A process according to at least one of Claims 1 and 2, characterised in that the ground coat frit used contains one or more of the oxides of the divalent metals such as alkaline earth metal, zinc, manganese and iron in a concentration of 20 to 40% by weight, preferably 20 to 30% by weight, the zinc oxide content not exceeding 12% by weight and the manganese oxide content and the iron oxide content each not exceeding 9% by weight.

4. A process according to at least one of Claims 1 to 3, characterised in that 1 to 10% by weight, preferably 3 to 5% by weight of finely divided iron oxide is added to the ground coat powder before adjustment of its electrical resistivity.

5. A process according to at least one of Claims 1 to 4, characterised in that the ground coat powder is applied in such a quantity that, after baking, the ground coat has a layer thickness of 0.01 to 0.04 mm, preferably 0.02 to 0.03 mm.

## Revendications

1. Procédé d'émaillage en deux couches dans lequel des poudres d'émail de fond et de couverture sont appliquées électrostatiquement sur des matériaux de support métalliques puis sont cuîtes ensemble, caractérisé en ce que la poudre d'émail de fond est réglée à une résistance électrique spécifique de $10^{10}-10^{14}$ ohm $\cdot$ cm, de préférence de $10^{12}-10^{14}$ ohm $\cdot$ cm et la poudre d'émail de couverture à une résistance électrique spécifique de $10^{14}-10^{16}$ ohm $\cdot$ cm, le rapport des résistances spécifiques s'élevant au moins à $10^2$.

2. Procédé selon la revendication 1, caractérisé en ce que la tension de surface de l'émail de fond s'élève au moins à 0,280 N/m, celle de l'émail de couverture au plus à 0,260 N/m, la différence des tensions de surface entre émail de fond et émail de couverture s'élevant au moins à 0,050 N/m.

3. Procédé selon l'une quelconque des revendications 1 et 2, caractérisé en ce que la fritte d'émail de fond employée contient un ou plusieurs des oxydes de métaux bivalents comme un métal alcalinoterreux, le zinc, le manganèse et le fer à une concentration de 20 à 40% en poids, de préférence de 20 à 30% en poids, la teneur en oxyde de zinc ne dépassant pas 12% en poids, la teneur en oxyde de manganèse ou oxyde de fer ne dépassant pas chaque fois 9% en poids.

4. Procédé selon l'une quelconque des revendications 1 à 3, caractérisé en ce qu'on ajoute à la poudre d'émail de fond, avant le réglage de la résistance électrique, 1 à 10% en poids, de préférence 3 à 5% en poids, d'oxyde de fer finement divisé.

5. Procédé selon l'une quelconque des revendications 1 à 4, caractérisé en ce qu'on applique la poudre d'émail de fond en une quantité pour que l'épaisseur de l'émail de fond après la cuisson s'élève à 0,01–0,04 mm, de préférence à 0,02–0,03 mm.